# EUROPÄISCHE PATENTANMELDUNG

(11) **EP 1 702 869 A2**
(43) Veröffentlichungstag der Anmeldung: **20.09.2006**
(21) Anmeldenummer: 06100152.5
(22) Anmeldetag: 09.01.2006
(51) Int. Cl.: B65G 47/244

(54) **Vorrichtung zum Ausrichten und Bereitstellen von quaderförmigem Fördergut**

(30) Priorität: 03.02.2005 DE 102005005074
(71) Anmelder: SIEMENS AKTIENGESELLSCHAFT, 80333 München (DE)
(72) Erfinder: Stehr, Peter, 63179, Obertshausen (DE)

(57) **Zusammenfassung**

Die Erfindung betrifft eine Vorrichtung zum weitgehend automatischen Ausrichten von quaderförmigem Fördergut auf einem Drehteller und zum Bereitstellen des ausgerichteten Fördergutes in definierter Orientierung für weitere anschließende Handhabungsvorgänge. Um das zu erreichen wird vorgeschlagen, dass der Drehteller (4) in einer gemeinsamen Horizontalebene zwischen mindestens einer Bereitstellvorrichtung (7, 8, 10 oder 12) für das ausgerichtete Fördergut (1) und einem Zulaufförderer (2) angeordnet ist, über den das Fördergut (1) heran transportierbar und von dem es auf den Drehteller (4) überführbar ist, auf dem das Fördergut (1) beim Drehen des Drehtellers (4) in eine vorherbestimmte neue Orientierung ausrichtbar ist und von dem das Fördergut (1) unter Beibehaltung seiner Orientierung auf die mindestens eine Bereitstellvorrichtung (7, 8, 10 oder 12) zur weiteren Handhabung überführbar ist.

## Beschreibung

Die Erfindung betrifft eine Vorrichtung zum Ausrichten von quaderförmigem Fördergut in einer hinsichtlich dessen längs-und/oder breitseitendefinierten Orientierung auf einem um eine vertikale Achse drehbaren Drehteller und zum Bereitstellen des ausgerichteten Fördergutes in dieser definierten Orientierung für weitere anschließende Handhabungsvorgänge.

Es gibt in der Fördertechnik eine Reihe von Aufgabenstellungen und Anwendungen, die es erforderlich machen, quaderförmiges Fördergut in einer bestimmten Lage hinsichtlich der Orientierung seiner Längs- bzw. Breitseite zu platzieren, etwa auf einem Ladehilfsmittel oder einem Förderer. Wird in diesen Fällen das Fördergut von vorgeschalteten Transportsystemen in einer undefinierten Orientierung oder in einer Orientierung, die für die anschließenden Handhabungsvorgänge nicht geeignet ist, herantransportiert, so muss es vor der weiteren Handhabung ausgerichtet werden. Bei einer häufig angewandten Methode zum Ausrichten des Fördergutes übernimmt eine Achse eines Roboters die Aufgabe, das Fördergut hinsichtlich seiner Längs- und Breitseite zu orientieren.

Eine Lösung zum Ausrichten von Leiterplatten ist in der DE 38 28 625 beschrieben. Dort wird ein Drehteller lediglich zum Verschwenken der Leiterplatten in der horizontalen Auflageebene verwendet, deren Ausrichten erfolgt jedoch mit Hilfe von Schiebern, die das Fördergut in die gewünschte Orientierungslage ausrichten. Der Drehteller dient somit lediglich als Hilfsmittel zur Vorausrichtung der Leiterplatte in eine für den Einsatz der Schieber geeignete Lage.

Die bekannten Vorrichtungen und Verfahren sind aufwändig, sofern sie zur Automatisierung geeignet sind.

Aufgabe der vorliegenden Erfindung ist es, eine einfache Vorrichtung zum Ausrichten von quaderförmigem Fördergut zu schaffen, mit der das Fördergut weitgehend automatisch in eine Position gebracht werden kann, in der es für weitere Handhabungsvorgänge übernommen werden kann.

Zur Lösung der Aufgabe wird erfindungsgemäß vorgeschlagen, dass, ausgehend von dem vorstehend geschilderten Stand der Technik, der Drehteller in einer gemeinsamen Horizontalebene zwischen mindestens einer Bereitstellungsvorrichtung für das ausgerichtete Fördergut und einem Zulaufförderer angeordnet ist, über den das Fördergut heran transportierbar und von dem es auf den Drehteller überführbar ist, auf dem das Fördergut beim Drehen des Drehtellers in eine vorherbestimmte neue Orientierung ausrichtbar ist und von dem das Fördergut nach Ausrichten unter Beibehaltung seiner Orientierung auf die mindestens eine Bereitstellvorrichtung zur weiteren Handhabung überführbar ist.

Anders als bei den bekannten Systemen erfolgt das Ausrichten des Fördergutes nicht mit Hilfe von gegen das Fördergut geführten Schiebern sondern ausschließlich durch die Drehung des Drehtellers, auf den das Fördergut mit Hilfe des Zuförderers überführt wurde. Durch Drehen des Drehtellers kann das Fördergut in jede gewünschte Orientierung bezüglich seiner Seitenflächen gedreht werden, vor allem auch in solche, bei denen die Abtransportrichtung parallel zur Längs-oder Querseite des Fördergutes ausgerichtet ist. In dieser durch Drehen des Drehtellers erreichten Position kann das Fördergut unter Beibehaltung seiner Orientierung auf die benachbarte Bereitstellungsvorrichtung überführt werden, von wo das Fördergut, beispielsweise vom Roboter einer Handhabungsvorrichtung, aufgenommen wird. Durch Drehen des Drehtellers um jeweils 90° kann das Fördergut entweder in Richtung seiner Längsseiten oder seiner Querseiten ausgerichtet werden, je nach dem in welcher Orientierung die Übergabe auf die Bereitstellungsvorrichtung erfolgen soll.

In einer Weiterbildung der Erfindung ist vorgesehen, dass die Längs- oder Breitseiten des Fördergutes auf dem Zuförderer parallel zur Förderrichtung ausrichtbar sind. Auf diese Weise kann bereits eine vorbereitende Orientierung des Fördergutes beim Zufördern erfolgen; die erfindungsgemäße Vorrichtung braucht in diesem Fall lediglich die Ausrichtung auf der Bereitstellungsvorrichtung hinsichtlich der Längs- oder Breitseiten des Fördergutes vorzunehmen.

Ein Zuförderer zur Ausrichtung des Fördergutes parallel zur Förderrichtung kann erfindungsgemäß als Rollenförderer mit Schrägrollen ausgebildet sein, die das Fördergut an einer der Seitenwände des Zuförderers anliegend ausrichten. Derartige Förderer sind an sich bekannt und können im Zusammenhang mit der vorliegenden Erfindung Erfolg versprechend eingesetzt werden.

Bei einer anderen Variante der Erfindung wird das Fördergut unausgerichtet von dem Zuförderer auf den Drehteller überführt. Das auf den Zuförderer, beispielsweise von Hand, aufgelegte Fördergut kann dabei in den unterschiedlichsten Orientierungslagen aufgelegt und in dieser Lage auf den Drehteller übergeben werden.

In einem solchen Fall muss nach einem weiteren Merkmal der Erfindung die Orientierung des Fördergutes auf dem Zuförderer und/oder dem Drehteller erfassbar sein und der Drehteller mit dem Fördergut muss in Abhängigkeit von der geforderten Orientierung des Förderguts auf der Bereitstellungsvorrichtung um einen Winkel so lange verdrehbar sein, bis das Fördergut die zur Überführung auf die Bereitstellvorrichtung vorherbestimmte Ausrichtung eingenommen hat. Wenn die Ausgangsorientierung des Fördergutes erfasst ist, d. h. wenn man weiß, in welcher Lage das Fördergut zu einer gewünschten Ausrichtung verdreht auf dem Drehteller abgelegt ist, kann man daraus den Verdrehwinkel des Drehtellers ermitteln, der erforderlich ist, um das Fördergut in die gewünschte Position zu bringen. Ist diese Position erreicht, kann das Fördergut, ohne diese Orientierung zu verändern, auf die Bereitstellungsvorrichtung überführt werden und dort in der Lage abgelegt werden, die zur Übernahme durch weitere Handhabungsvorrichtungen gewünscht ist.

Erfindungsgemäß kann die Erfassung der Orientierung des Förderguts elektronisch erfolgen, wobei das entsprechend erfasste Signal einem Rechner zugeleitet wird, der nach Berechnung des erforderlichen Drehwinkels ein Signal an den Drehantrieb zur Betätigung des Drehtellers übermittelt. Eine Erfassungsvorrichtung kann beispielsweise aus Lichtsensoren oder auch Einrichtungen zur Bilderkennung bestehen.

In einer Ausgestaltung der Erfindung sind dem Drehteller zwei Bereitstellungsvorrichtungen nachgeordnet, von denen eine zur Aufnahme in Längsrichtung orientierten Fördergutes und die andere zur Aufnahme in Querrichtung orientierten Fördergutes vorgesehen ist. In diesem Fall sind seitlich am Umfang des Drehtellers zwei Transferstellen vorgesehen, eine an der das Fördergut in Längsrichtung, also parallel zu seinen Längsseiten abgefördert wird und eine zweite Transferstelle, in der das Fördergut in Richtung seiner Breitseiten auf die Bereitstellungsvorrichtung überführt wird und somit in einer um 90° zur erstgenannten Stellung orientierten Lage auf der Bereitstellungsvorrichtung abgelegt werden kann.

Die Bereitstellungsvorrichtungen können jeweils als Rollen-oder Bandförderer ausgebildet sein, die das Fördergut in einer solchen Ausrichtung übernehmen, in der es vom Drehteller überführt wird.

In einer anderen günstigen Ausgestaltung der Erfindung ist vorgesehen, dass dem Drehteller eine Bereitstellungsvorrichtung zugeordnet ist, die als Verschiebetisch zum Übernehmen des ausgerichteten Fördergutes von dem Drehteller und zum Verschieben des Fördergutes parallel zu einer seiner Seiten ausgebildet ist. Auf dem Verschiebetisch sind eine große Anzahl von verschiedenen Bereitstellungspositionen belegbar; das auf dem Drehteller in Längs- oder Quererstreckung ausgerichtete Fördergut wird dorthin übergeben und in der jeweiligen Position abgelegt, in der ein Handhabungsgerät das Fördergut übernimmt.

In einer noch anderen Ausgestaltung der Erfindung ist vorgesehen, dass zum orientierten Bereitstellen von unausgerichtet, auf dem Zuförderer herantransportiertem Fördergut die Bereitstellungsvorrichtung als Verschiebetisch ausgebildet ist, der mindestens so breit wie der Durchmesser des Drehtellers zuzüglich zweier maximaler Fördergutlängen ist und mindestens die halbe Fläche des Drehtellers umgreift. Diese Vorrichtung kommt dann zum Einsatz, wenn Fördergut unausgerichtet auf dem Zuförderer abgelegt wurde und erst auf dem Drehteller die notwendige Ausrichtung erhält. In diesem Fall lassen sich keine festen Transferstellen am Umfang des Drehtellers festlegen, die Übergabe erfolgt in Abhängigkeit von der Lage des Fördergutes auf dem Drehteller, wobei mehr als eine halbe Umdrehung des Drehtellers zum Ausrichten des Fördergutes erforderlich sein kann. Aus diesem Grund muss bei dieser Lösung der Verschiebetisch ausreichend breit sein, um auch seitlich des Drehtellers überführtes Fördergut aufnehmen zu können.

Der Verschiebetisch selbst kann bei beiden Lösungen als Rollentisch ausgebildet und mit verschwenkbaren Transportrollen versehen sein. Diese Transportrollen ermöglichen den Längs- und Quertransport des Fördergutes parallel zu dessen Seiten auch in Diagonalrichtung, so dass eine große Menge Fördergutes auf dem Verschiebetisch in der entsprechenden Orientierung abgelegt werden kann.

In einer Ausgestaltung der Erfindung kann auch vorgesehen sein, den Drehteller selbst mit Transportrollen für das Auflegen des Förderguts zu bestücken. Die Rollen können sowohl sternförmig radial angeordnet sein als auch, wie beim vorstehend beschriebenen Verschiebetisch richtungseinstellbare Transportrollen sein, mit denen das Transportgut parallel zur Längs- oder Quererstreckung überführbar ist.

Eine andere Möglichkeit der Übergabe des Fördergutes vom Drehteller auf die Bereitstellungsvorrichtung bzw. - vorrichtungen besteht in der Verwendung von Abschiebern, beispielsweise in Form bekannter Pusher, mit denen das Fördergut in der ausgerichteten Lage vom Drehteller auf die Bereitstellungsvorrichtung verschoben werden kann.

Die vorstehend beschriebene Erfindung ist einfach herstellbar und erreicht ein Ausrichten des Fördergutes mit einfachen bewährten Mitteln. Die Vorrichtung ist in Verbindung mit den unterschiedlichsten nachgeschalteten Handhabungsgeräten einsetzbar, das Fördergut wird während aller Überführungsvorgänge am Boden der Vorrichtung abgestützt. Bei entsprechender Ausbildung der Bereitstellungsvorrichtung kann diese auch als Zwischenpuffer genutzt werden.

Ein Ausführungsbeispiel der Erfindung ist in der Zeichnung dargestellt und wird nachfolgend beschrieben.

Es zeigt:
- Figur 1: die erfindungsgemäße Vorrichtung mit zwei Bereitstellungsvorrichtungen;
- Figur 2: die erfindungsgemäße Vorrichtung mit nur einer Bereitstellungsvorrichtung und
- Figur 3: die erfindungsgemäße Vorrichtung mit einer Bereitstellungsvorrichtung zum Aufnehmen der unausgerichteten Stückgutteile nach deren Ausrichten.

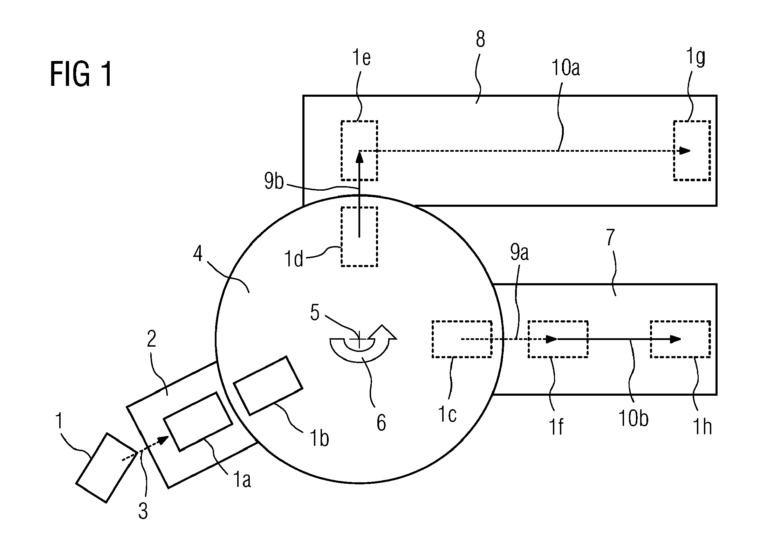

In den Zeichnungsfiguren ist die Erfindung zum leichteren Verständnis grob vereinfacht dargestellt. Ein Fördergutteil 1, das nachfolgend als Paket bezeichnet wird, wird in diesem Ausführungsbeispiel, beispielsweise von Hand, auf den als Rollenförderer gestalteten Zuförderer 2 abgelegt, wobei das Paket, wie in Figur 1 bei 1a dargestellt, bereits weitgehend in seiner Längserstreckung parallel zur Transportrichtung 3 ausgerichtet ist. In dieser Position bzw. Orientierung wird das Paket auf den Drehteller 4 der erfindungsgemäßen Vorrichtung überführt und kommt dort in einer Orientierung zu liegen, wie diese bei 1b dargestellt ist. Durch Verdrehen des Drehtellers 4 um seine (zur Zeichnungsebene senkrechte) Mittelachse 5 in Pfeilrichtung 6 gelangt das Paket 1 entweder in die bei 1c gestrichelt dargestellte Position in eine Lage gegenüber der ersten Bereitstellungsvorrichtung 7 oder beim weiteren Verdrehen in die gestrichelt dargestellte Position 1d in eine Lage gegenüber der zweiten Bereitstellungsvorrichtung 8.

In diesen Positionen können die Pakete 1c bzw. 1d jeweils in Transportrichtung 9a oder 9b auf die Bereitstellungsvorrichtungen 7 bzw. 8 übergeben werden, wobei bei 1e erkennbar, das Paket auf der Bereitstellungsvorrichtung 8 quer zu seiner Längserstreckung in der Transportrichtung 10a bewegt wird, während das in der gestrichelt gezeichneten Position 1f ausgerichtete Paket in Transportrichtung 10b parallel zu seiner Längserstreckung transportiert wird. Dementsprechend liegen die Pakete, wie bei 1g und 1h angedeutet, in ihrer endgültigen Position jeweils um 90° zueinander verdreht, entweder in Längs- oder Querausrichtung zur Abgabe an eine (nicht dargestellte) Handhabungsvorrichtung bereit.

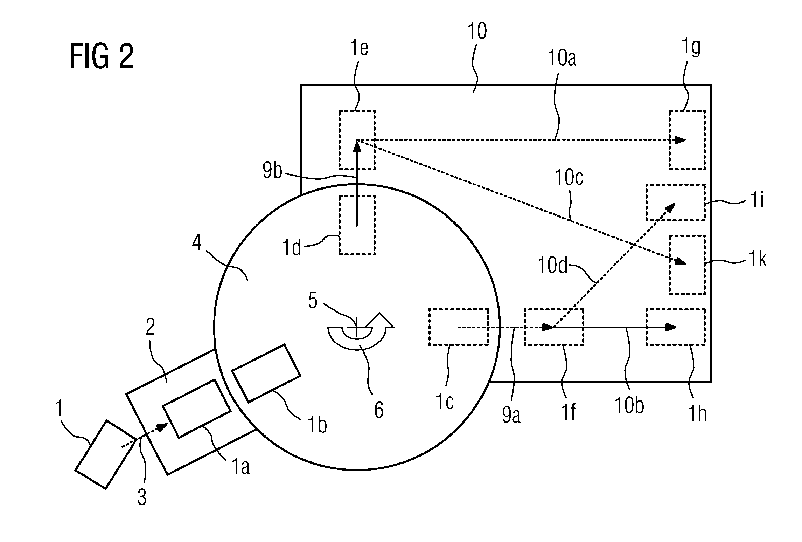

In Figur 2 sind gleiche Teile gleich bezeichnet. Der Unterschied zu der vorstehend beschriebenen, in der ersten Zeichnungsfigur dargestellten Lösung besteht darin, dass hier nur eine Bereitstellungsvorrichtung 10 verwendet wird, die als Verschiebetisch ausgebildet ist. Durch Ausstattung des Verschiebetisches der Bereitstellungsvorrichtung 10, beispielsweise mittels in ihren Transportrichtungen einstellbarer, vertikal umlaufenden Transportrollen können die bei 1e und 1f dargestellten Pakete jeweils parallel zu zwei ihrer Seitenflächen in jede beliebige Position der Bereitstellungsvorrichtung transportiert werden wie bei 1g bis 1h - punktiert angedeutet. Die schrägen Transportwege sind bei 10c und 10d angedeutet und machen erkennbar, in welcher Richtung, z.B. von 1e zu 1g, von 1e zu 1k, von 1f zu 1h oder von 1f zu 1i, die Pakete 1 parallel zu ihren Seitenflächen transportiert worden sind.

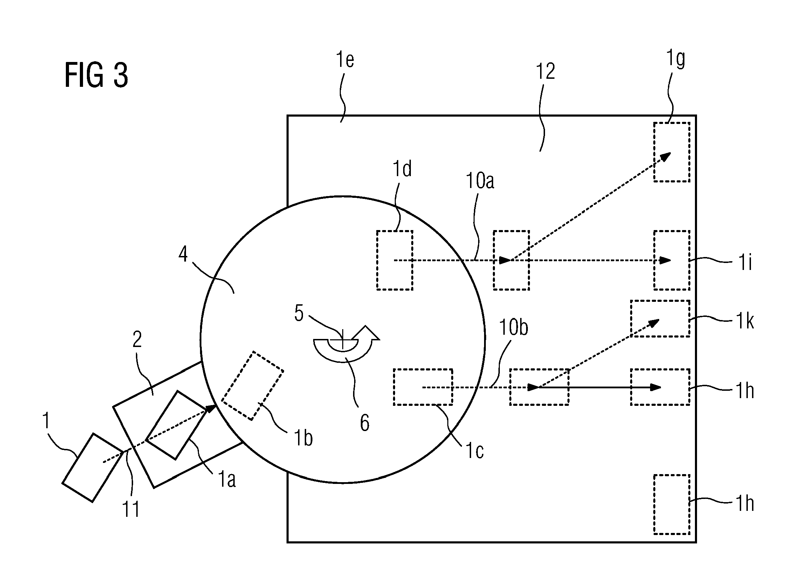

In Figur 3 ist das bei 1a symbolisierte Paket unausgerichtet auf den Zuförderer aufgelegt worden und in der gleichen Lage entlang der Transportrichtung 11 auf den Drehteller 4 übergeben worden. Die Ausgangslage auf dem Drehteller 4 ist gestrichelt bei 1b dargestellt. Der Drehteller 4 wird nun um seine vertikale Achse 5 so wie bei den zuvor beschriebenen Ausführungsbeispielen in Richtung 6 gedreht und zwar solange, bis das bei 1b dargestellte Paket die Position 1c oder 1d erreicht hat. In einer dieser Positionen wird das Paket 1c oder 1d in der Transportrichtung 10b oder 10a auf die Bereitstellungsvorrichtung übergeben und, wie anhand der Figur 2 beschrieben, mit Hilfe von in Transportrichtung einstellbaren Transportrollen (nicht dargestellt) in eine der Endpositionen 1g bis 1k transportiert. Die Bereitstellungsvorrichtung ist auch hier als Verschiebetisch 12 ausgebildet, der allerdings bei dieser Lösung ausreichend breit gestaltet ist, damit auch bei größeren Drehwinkeln des Drehtellers 4 Pakete seitlich an den Verschiebetisch übergeben werden können.

Die einstellbaren Transportrollen der Drehtische 4 sind, weil hinreichend bekannt, in den schematischen Zeichnungsdarstellungen nicht erkennbar. Ebenso wenig sind Einzelheiten des Zuförderers 2 oder der zwei Bereitstellungsvorrichtungen 7 oder 8 (Fig.1) die als Band-oder Rollenförderer ausgestaltet sind, dargestellt.

Die Drehung des Drehtellers 4 in Pfeilrichtung 6 wird durch (weil ebenfalls bekannt, nicht dargestellte) elektronische Einrichtungen zur Erfassung der Orientierung der Pakete 1 ermittelt, die mit einem Rechner zusammenarbeiten, der aus dem die Orientierung des Paketes repräsentierenden erfassten Signal die Größe des Winkels ermittelt, um den der Drehteller 4 in Richtung 6 verdreht werden muss. Dieser Winkel ist stets abhängig von der Lage, in der die Pakete auf den Drehteller übergeben werden und von der gewünschten Ausrichtung, in denen das Paket auf der Bereitstellungsvorrichtung liegen soll.

## Patentansprüche

1. Vorrichtung zum Ausrichten von quaderförmigem Fördergut in einer hinsichtlich dessen Längs- und/oder Breitseiten definierten Orientierung auf einem um eine vertikale Achse drehbaren Drehteller und zum Bereitstellen des ausgerichteten Fördergutes in dieser definierten Orientierung für weitere anschließende Handhabungsvorgänge,
**dadurch gekennzeichnet, dass**
der Drehteller (4) in einer gemeinsamen Horizontalebene zwischen mindestens einer Bereitstellvorrichtung (8) für das ausgerichtete Fördergut (1) und einem Zuförderer (2) angeordnet ist, über den das Fördergut (1) heran transportierbar und von dem es auf den Drehteller (4) überführbar ist, auf dem das Fördergut (1) beim Drehen des Drehtellers (4) in eine vorherbestimmte neue Orientierung ausrichtbar ist und von dem das Fördergut (1) unter Beibehaltung seiner Orientierung auf die mindestens eine Bereitstellvorrichtung (7 oder 8) zur weiteren Handhabung überführbar ist.

2. Vorrichtung nach Anspruch 1,
**dadurch gekennzeichnet, dass**
die Längs- oder Breitseiten des Fördergutes (1) auf dem Zuförderer (2) parallel zur Transportrichtung (3) ausrichtbar sind.

3. Vorrichtung nach Anspruch 2,
**dadurch gekennzeichnet, dass**
der Zuförderer (2) als Rollenförderer mit Schrägrollen zur Ausrichtung des Fördergutes (1) an einer der Seitenwände des Zuförderers (2) ausgebildet ist.

4. Vorrichtung nach Anspruch 1,
**dadurch gekennzeichnet, dass**
das Fördergut (1) unausgerichtet von dem Zuförderer (2) auf den Drehteller (4) überführt wird.

5. Vorrichtung nach Anspruch 1 bis 4,
**dadurch gekennzeichnet, dass**
die Orientierung des Fördergutes (1) auf dem Zuförderer (2) und/oder dem Drehteller (4) erfassbar ist und der Drehteller (4) mit dem Fördergut (1) in Abhängigkeit von der geforderten Orientierung des Fördergutes (1) auf der Bereitstellungsvorrichtung (7 oder 8) um einen Winkel so weit verdrehbar ist, bis das Fördergut (1) die zur Überführung auf die Bereitstellvorrichtung (7 oder 8) vorherbestimmte Ausrichtung eingenommen hat.

6. Vorrichtung nach Anspruch 5,
**dadurch gekennzeichnet, dass**
die Erfassung der Orientierung des Fördergutes (1) elektronisch erfolgt und das entsprechende erfasste Signal einem Rechner zugeleitet wird, der nach Berechnung des erforderlichen Drehwinkels ein Signal an den Drehantriebes zur Betätigung des Drehtellers (4) übermittelt.

7. Vorrichtung nach einem der Ansprüche 1 bis 6,
**dadurch gekennzeichnet, dass**
dem Drehteller (4) zwei Bereitstellungsvorrichtungen (7 und 8) nachgeordnet sind, von denen eine (7 zur Aufnahme in Längsrichtung orientierten Fördergutes (1f) und die andere (8) Aufnahme in Querrichtung orientierten Fördergutes (1e) vorgesehen ist.

8. Vorrichtung nach Anspruch 7,
**dadurch gekennzeichnet, dass**
die Bereitstellungsvorrichtungen (7 oder 8) Rollen- oder Bandförderer sind.

9. Vorrichtung nach einem der Ansprüche 1 bis 6,
**dadurch gekennzeichnet, dass**
dem Drehteller (4) eine Bereitstellungsvorrichtungen (10) zugeordnet ist, die als Verschiebetisch zum Übernehmen des ausgerichteten Fördergutes (1) von dem Drehteller (4) und zum Verschieben des Fördergutes (1) parallel zu einer seiner Seiten ausgebildet ist.

10. Vorrichtung nach einem der Ansprüche 1 bis 6,
**dadurch gekennzeichnet, dass**
zum orientierten Bereitstellen von unausgerichtet auf dem Zuförderer (2) herantransportiertem Fördergut (1) die Bereitstellungsvorrichtungen als Verschiebetisch (12)ausgebildet ist, der mindestens so breit wie der Durchmesser des Drehtellers (4) zuzüglich zweier maximaler Fördergutlängen ist und mindestens die halbe Fläche des Drehtellers (4) umgreift.

11. Vorrichtung nach Anspruch 9 oder 10,
**dadurch gekennzeichnet, dass**
der Verschiebetisch (10 bzw. 12) als Rollentisch mit verschwenkbaren Transportrollen ausgebildet ist.

12. Vorrichtung nach einem der Ansprüche 1 bis 11,
**dadurch gekennzeichnet, dass**
der Drehteller (4) mit Transportrollen für das aufliegende Fördergut (1) bestückt ist.

13. Vorrichtung nach Anspruch 12,
**dadurch gekennzeichnet, dass**
die Transportrollen sternförmig radial angeordnet sind.

14. Vorrichtung nach Anspruch 12,
**dadurch gekennzeichnet, dass**
die Transportrollen richtungseinstellbar sind.

15. Vorrichtung nach Anspruch 12,
**dadurch gekennzeichnet, dass**
das Fördergut (1) mit Hilfe einer Vorrichtung vom Drehteller (4) auf die Bereitstellungsvorrichtung (7, 8, 10 oder 12) abschiebbar ist.

16. Vorrichtung nach Anspruch 15,
**dadurch gekennzeichnet, dass**
zum Abschieben des Fördergutes (1) von dem Drehteller (4) Pusher vorgesehen sind.
